# EUROPEAN PATENT APPLICATION

(11) **EP 1 258 937 A1**
(43) Date of publication of application: **20.11.2002**
(21) Application number: 01830314.9
(22) Date of filing: 17.05.2001
(51) Int. Cl.: H01M 8/10, H01M 8/24

(54) **Micro silicon fuel cell, method of fabrication and self-powered semiconductor device integrating a micro fuel cell**

(71) Applicant: STMicroelectronics S.r.l., 20041 Agrate Brianza (Milano) (IT)
(72) Inventor: D'Arrigo, Giuseppe, 95030 Tremestieri Etneo (IT); Coffa, Salvatore, 95030 Tremestieri Etneo (IT); Spinella, Rosario Corrado, 95126 Catania (IT)
(74) Representative: Pellegri, Alberto

(57) **Abstract**

A miniscule fuel cell is realized on a doped monocrystalline silicon subtrate.
The microporous catalytic electrodes permeable to a gaseous fuel or an oxygen containing gas are constituted by a plurality of coplanar and parallel strips (3,4) of a catalytic metallic material electroplated or sputtered over an heterogeneous columnar skeleton structure of monocrystalline silicon (1,2) purposely formed by etching the silicon substrate to realize the plurality of parallel trenches (7,8) for ducting reagent and products of the electrode reactions to and from the microporous catalytic electrode formed thereon.
The spaced parallel strips (3,4) constituting the microporous catalytic electrode permeable to gases are electrically connected one to the other by parallel strips (5,6) of conducting material alternate to the microporous strips of catalytic electrode material. The whole composite electrode structure of the half-cell is in electrical contact with the conducting substrate of monocrystalline silicon in correspondence of said strips of conducting material deposited over the crests of separation between adjacent parallel trenches etched in the silicon substrate, and optionally also in correspondence of the heterogeneous columnar skeleton of conducting monocrystalline silicon in case it is not completely removed by an eventual chemical and/or electrochemical final etching step after having deposited thereon the catalytic metal to form a self-sustaining microporous structure.
Two half-cells thus formed on distinct silicon substrates are thereafter placed one against the other sandwiching, at least over the cell area, a thin film of permionic membrane substantially impermeable to fluids.

## Description

### FIELD OF THE INVENTION

The present invention relates in general to primary fuel cells and more in particular to a fuel cell of minuscule size integrable in a semiconductor device.

### BACKGROUND OF THE INVENTION

Fuel cells fed with a gaseous fuel as for example hydrogen and/or methanol and with oxygen or air for generating electricity are electrochemical devices known and being developed in the last decades. There is a wealth of literature on the different and most peculiar technical aspects of these primary generators, such as for example the permionic cell separator, the catalytic electrodes, cell structure, current collectors and distributors, etc..

Most commonly, the electrolyte is a polymeric film or membrane of an ion exchange resin, typically of a cation exchange resin often referred to with the expression *Proton Exchange Membrane* (PEM), on the opposite faces of which are present microporous catalytic electrodes permeable to the gaseous reagents (the fuel gas on one face and the oxygen or oxygen containing gas on the other face).

Cations or most typically protons (H⁺) that are generated by ionization of hydrogen upon shedding electrons to the positive electrode at sites (triple phase points) at which are mutually in contact the catalytic material of the electrode (obviously in continuity of electric path with the negative electrode of the cell through the load circuit), the solid polymer electrolyte and the fuel, for example hydrogen, being fed to the positive electrode of the cell, migrates under the effect of the electric field through the proton exchange membrane eventually reaching similar catalytic sites on the negative electrode of the cell disposed on the opposite phase of the membrane, whereat the proton H⁺ combines with oxygen to form water while absorbing electrons from the negative electrode.

It is well known that a fundamental requisite to achieve an acceptable rate (dynamics) of the electrodic processes anodic and cathodic (half-cell reactions) that take place on the opposite faces of the ion exchange membrane constituting a solid polymer electrolyte of the cell is the numerosity of active sites available to support the respective half-cell reaction or in other words their density per unit area of the cell. For this purpose, the catalytic electrodes must necessarily be made of metallic structures permeable to gases and having a relatively high specific surface besides being made of a chemically stable and catalytic metal.

Platinum and often platinum black, either supported or not on high specific surface particles of a chemically inert and electrically conductive material such as for example carbon (carbon black), is one of the catalytic electrode materials most used, though other noble metals such as iridium, palladium, rhodium, ruthenium and alloys thereof may also be used.

Even the techniques used for forming the catalytic electrodes on the opposite faces of the ion exchange membrane must ensure an adequate porosity and permeability of the electrode structure by the respective liquid reagent and/or gas (fuel, oxygen or oxygen containing gas, mixture, water) in order to favor an effective mass transfer from and to the sites capable of supporting the electrodic reaction (half-cell reaction). In particular, the catalytic electrode constituting the negative electrode of the fuel cell must also provide for an unhindered and immediate flow out of any excess water that may be formed as a product of the half-cell reaction.

In order to meet these basic requisites there have been numerous proposals and developments of techniques for incorporating and/or adhering particles of catalytic electrode materials directly on the opposite faces of the membrane while ensuring an adequate porosity and permeability of the so bonded electrode structure by the gaseous reagents and products, for example using as an adhesion binder a polytetrafluoroethylene in the form submicrometric fibrous particles.

Another approach is to realize suitable electrode structures by microetching that is electrodes in the form of thin metal films rendered microporous by a microetching step to be bonded or pressed on the opposite faces of the ion exchange membrane.

The document US-A-6,136,412 discloses a membrane-electrode assembly in which the electrode in contact with the membrane is constituted by a nonstructured porous electrically conducting element on which a catalytic metal (Pt) is deposited. The prior art documents cited in this patent provide a vast collection of publications representative of the state of the art of fuel cells.

In all instances, the requisites of microporosity, permeability and catalytic properties of the metal forming the electrode of the cell impose the use of appropriate current collectors capable of establishing electric contact points densely and uniformly distributed over the "rear surface", on the entire area, of the electrode in order to provide for an adequate current conducting body easily connectable to the load circuit of the fuel cell.

In case of preformed catalytic electrodes in form of thin microporous metal films, the current collectors may even fulfil the other fundamental function of providing for a mechanical support of the microporous catalytic electrode that typically is intrinsically fragile and of difficult handling.

Such an electrochemical device of electrical generation has the advantage of being free of corrosive liquid electrolytes, of toxic compounds and/or pollutants, has an outstandingly high power/weight ratio, an autonomy of operation that may be modulated to need (reservoir of usable fuel) and an intrinsic simplicity of realization that makes it particularly suited to power portable instruments and devices, and more particularly systems that may be entirely integrated monolithically on silicon, such as for example mobile radio, monitoring instruments, portable computers, signalling devices, radio beacons and the likes.

Another important area of application is that relating to the realization of gas sensors integrable together with associate monitoring, testing and signalling circuitry on silicon.

With such a growing demand of fuel cells of reduced size for powering portable electronic instruments and apparatuses, the possibility of realizing a fuel cell of minuscule size directly on silicon becomes extraordinarily relevant.

Such a form of realization of a fuel cell could even be integrable (at least a half-cell of it) on the same chip on which the functional circuitry to be powered by the micro fuel cell is integrated.

Even in the area of bio-chemical process research, micro fuel cells integrable on silicon may be very useful.

### OBJECT AND SUMMARY OF THE INVENTION

The main aim of this invention is to provide a fuel cell of minuscule size realized on silicon.

A further aim of this invention is to provide a micro fuel cell that can be at least partly integrated on a silicon chip containing an integrated circuit to be powered by the micro fuel cell.

A further objective of this invention is to provide a method of fabricating a fuel cell on silicon.

According to a first aspect of this invention, each half-cell composed of a microporous catalytic electrode permeable to a gaseous fuel or to an oxygen containing gas and electrically connectable through the component parts of the half-cell to an electric load circuit, is defined and entirely realized on a conducting monocrystalline silicon substrate on which a plurality of parallel trenches cut in a defined cell area on a face of the substrate provide for feed or exhausting channels of the respective gaseous fluid to or from the microporous catalytic electrode of the half-cell.

The microporous catalytic electrode permeable to gases is constituted by a plurality of coplanar and parallel strips of a catalytic metallic material electroplated or sputtered over an heterogeneous columnar skeleton structure of monocrystalline silicon purposely formed by etching the silicon substrate to realize the plurality of parallel trenches for ducting reagents and products of the electrode reactions to and from the microporous catalytic electrode formed thereon.

The spaced parallel strips constituting the microporous catalytic electrode permeable to gases are electrically connected one to the other by parallel strips of conducting material alternate to the microporous strips of catalytic electrode material. The whole composite electrode structure of the half-cell is in electrical contact with the conducting substrate of monocrystalline silicon in correspondence of said strips of conducting material deposited over the crests of separation between adjacent parallel trenches etched in the silicon substrate, and optionally also in correspondence of the heterogeneous columnar skeleton of conducting monocrystalline silicon in case it is not completely removed by an eventual chemical and/or electrochemical final etching step after having deposited thereon the catalytic metal to form a self-sustaining microporous structure.

Two half-cells thus formed on distinct silicon substrates are thereafter placed one against the other sandwiching, at least over the cell area, a thin film of permionic membrane substantially impermeable to fluids.

It is evident how a half-cell of the invention may be realized in a dedicated area of the surface of a silicon chip on which a load circuitry of the fuel cell is integrated.

The other half-cell, made in a completely similar manner on a distinct silicon substrate may thereafter be operatively assembled over the monolithically integrated half-cell of the first chip of silicon containing the load circuitry to be powered by the fuel cell, by sandwiching therebetween over the cell area, a permionic membrane and permanently assembling the fuel cell by gluing and/or using an appropriate clamp.

Alternatively, the permionic membrane separator of the fuel cell may be formed in situ by depositing a film of fluid ion exchange resin, for example by a spinning technique similar to the one used for applying a film of resist on the surface of a silicon wafer and thereafter causing a complete polymerization of the resin.

Another suitable method of deposition of a fluorocarbon polymer having fixed sulphonic acid groups is disclosed in US Pat. No. 4,661,411.

A gas feeding conduit permits to feed fuel gas to the porous catalytic electrode of either one or the other half-cell while another conduit ensures an appropriate circulation of air or the feeding of oxygen to the counter electrode of the micro fuel cell thus formed on silicon, as well as ensuring the exhausting of any excess water that eventually forms at the negative electrode of the cell.

According to another aspect of the invention, a process for fabricating a half-cell of a fuel cell on a conducting monocrystalline silicon substrate compatible with the processing step normally required for fabricating integrated semiconductor devices is also provided.

### BRIEF DESCRIPTION OF THE DRAWINGS

The different aspect and advantages of this invention will become even more evident through the following description of several embodiments and by referring to the attached drawings, wherein:
**Figure 1** is a schematic cross section of a micro fuel cell made on a monocrystalline silicon substrate according to the present invention; the **Figures** from **2** to **8** show relevant steps of the process of fabrication of each half-cell;
**Figure 9** is a scheme of the equipment for electrochemically etching a p⁺ or n⁺ silicon substrate to form an heterogeneous columnar crystalline skeleton;
**Figure 10** is a TEM microphotograph showing the columnar nature of the residual skeleton of silicon that forms in the etching zones;
**Figure 11** is a curve showing the modulability of the porosity by regulating the current density of electrochemical etching of the silicon;
**Figures 12** and **13** are respectively a TEM microphotograph and a diffraction pattern of the microporous electrode structure obtained by electroplating platinum from an aqueous sulfate solution acidified with sulfuric acid, on the columnar crystalline silicon structure of Fig. 10;
**Figure 14** is a SEM microphotograph of the cross section of an integrated half-cell of the invention;
**Figures 15** and **16** are respectively a cross section and an exploded detail view of a micro fuel cell of the invention.

### DESCRIPTION OF FEW EMBODIMENTS

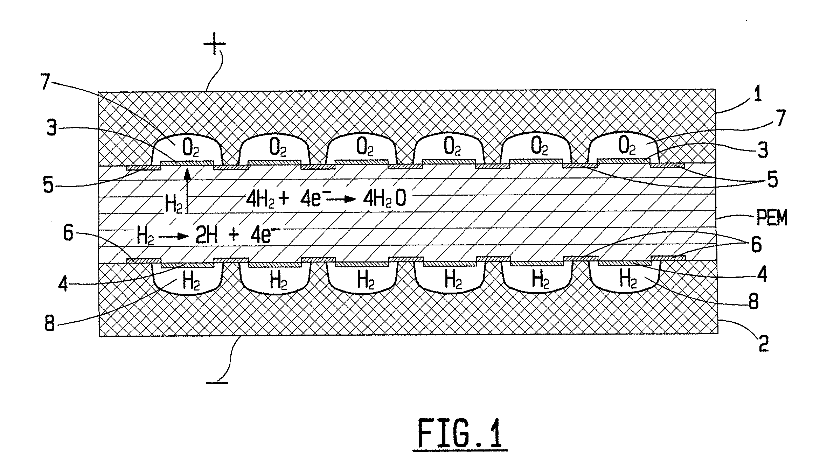

The structure of the fuel cell of the invention is reproduced schematically in Fig. 1.

The cell is composed of two half-cells, positive (+) and negative (-), respectively, having a substantially similar structure, hydraulically separated by a membrane of a cation exchange polymeric material PEM.

The current collector body of the positive half-cells 1 as well as of the negative half-cell 2 is of doped monocrystalline silicon having an electrical conductivity generally equal or less than 1 ohm cm.

The silicon on which the two half-cells are formed may be of the n⁺ type or of the p⁺ type and have a dopant concentration equal or greater than 10¹⁷ atoms/cm³.

Preferably, the silicon constituting the two half-cells is p⁺ type silicon, doped with boron, with a concentration that is generally comprised between 10¹⁷ and 10¹⁹ atoms/cm³.

The gas permeable microporous catalytic electrode of each half-cell, respectively 3 and 4, is composed of a plurality of coplanar parallel strips of a porous catalytic metallic material, mechanically and electrically connected to one another by strips of a nonporous metal, respectively 5 and 6, alternately disposed in respect to the microporous catalytic strips 3 and 4, and in electrical continuity with the conducting silicon substrate in coincidence of the crests of separation of parallel channels for the feeding of gaseous reagents, respectively 7 and 8, created in the silicon substrate by electrochemical and/or chemical etching, in correspondence of the coplanar parallel strips 3 and 4 forming the microporous catalytic electrode.

The nonporous metal strips 5 and 6 of electrical connection, preformed in defined areas of separation of the parallel spaced microporous strips 3 and 4, besides establishing the electrical continuity of the various portions of microporous catalytic electrode and between the latter and the doped silicon substrate acting as a current collector or distributor of the respective catalytic electrode, are also exploited as a mask for the etching step of the silicon substrate for forming the gas passage channels 7 and 8, as will be described in more detail later.

Each half-cell thus constituted is a self-standing assembly that may be coupled directly on the face of an ion exchange membrane or film PEM.

The coupling may be established in a permanent fashion by pressing the two half-cells, suitably aligned, over the opposite surfaces of the PEM membrane and blocking the sandwich so constituted by gluing and/or by clamping, according to generally known techniques.

The substrate may be a silicon wafer of type Cz(100), doped either p⁺ or n⁺.

According to a preferred method of fabrication of a half-cell according to this invention, a p⁺ type monocrystalline silicon substrate, doped with boron with a concentration comprised between 10¹⁸ and 10¹⁹ and having an electrical conductivity below 1 ohm cm is employed.

Of course, a suitably doped substrate, preferably of type p⁺, may even be obtained by epitaxial growth or by implant and diffusion in a monocrystalline silicon wafer of different characteristics as far as the type of dopant and electrical conductivity, according to generally known fabrication techniques in the industry of integrated devices.

The main steps of the fabrication process are depicted in the series of Figures from 2 to 8, for one of the two structurally similar half-cells.

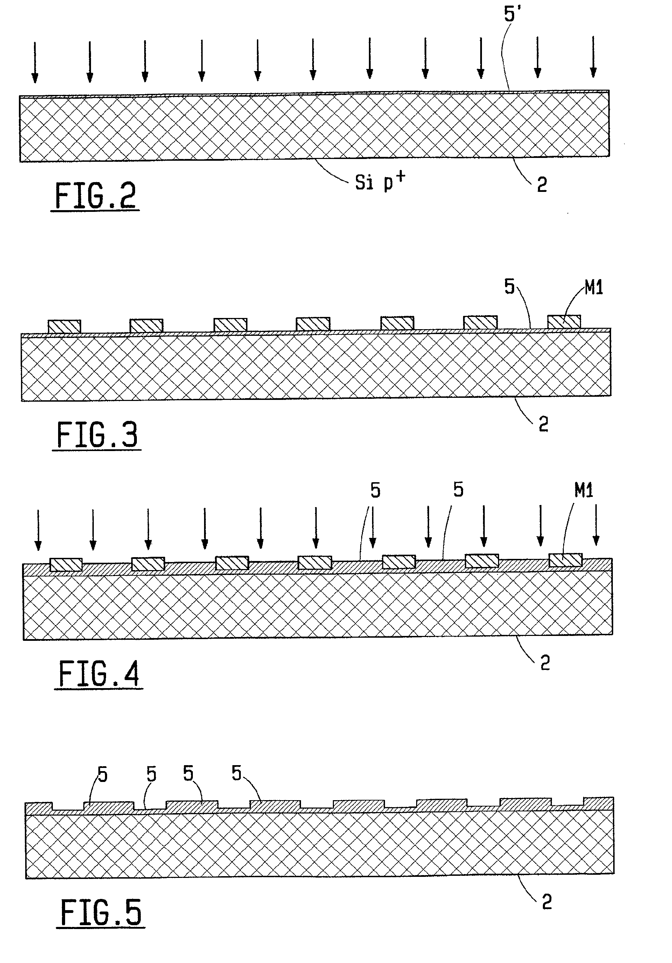

A first step, depicted in Fig. 3, consists in depositing a thin film or germ layer 5' of a metal chosen from the group composed of gold, platinum, palladium, iridium, rhodium, ruthenium and alloys containing at least one of these metals, having a thickness generally comprised between 20 and 60 nm, on the surface of the silicon substrate. Most preferably, the thin germ film is of sputtered gold.

The process contemplates thereafter a first masking step with resist M1 for defining the "metals" to be electrodeposited over the germ player 5'. The metals will serve as mechanical support and as electrical connections for the portions of or most preferably for the parallel strips of porous catalytic metal that shall constitute the electrode of the half-cell.

As shown in Figures 3 and 4, through the mask M1, a metal of the group of metals specified above is galvanically deposited, using the germ layer 5' as initial cathode. The thus electroplated metals 5 may have a thickness generally comprised between 5 and 30 µm.

After having removed the resist mask M1, as shown in Fig. 5, by way of anodic dissolution or selective etching of the metal of the germ layer 5', the latter is completely removed from the previously masked areas under the resist mask M1.

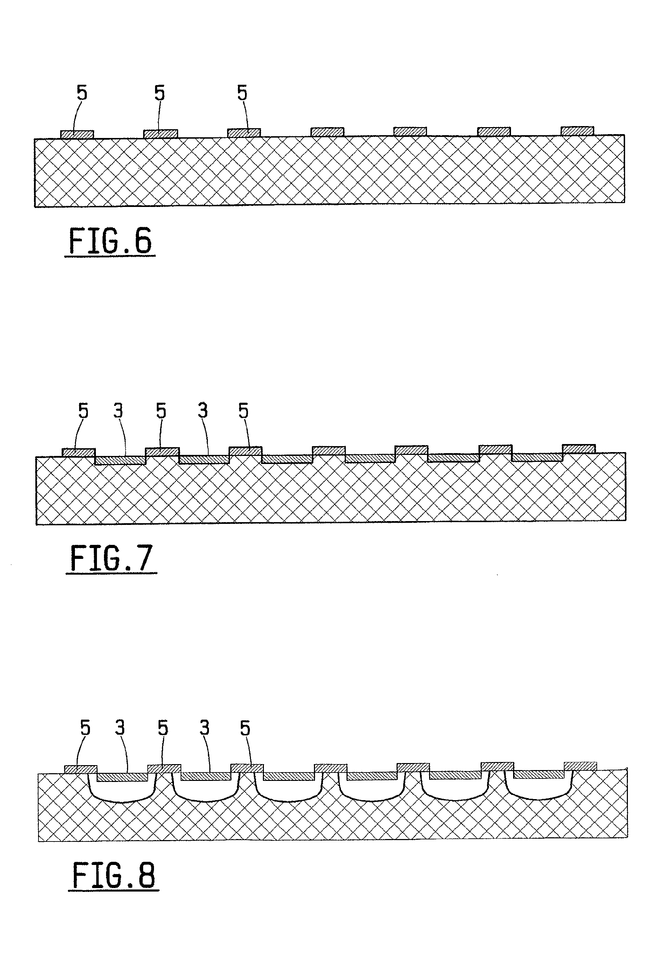

At this point of the fabrication process, the structure is as schematically shown in Fig. 6.

By exploiting the metals 5 as a mask, the doped silicon substrate is subjected to an electroerosion treatment by polarizing the silicon substrate as anode of an electrolytic cell containing an aqueous solution of hydrofluoric acid at 12% by volume, using as a counterelectrode (cathode) a gold electrode (or even of another metal in consideration of the fact that the cathodic polarization, if not interrupted, effectively protects the metal from chemical attack by the acid electrolyte).

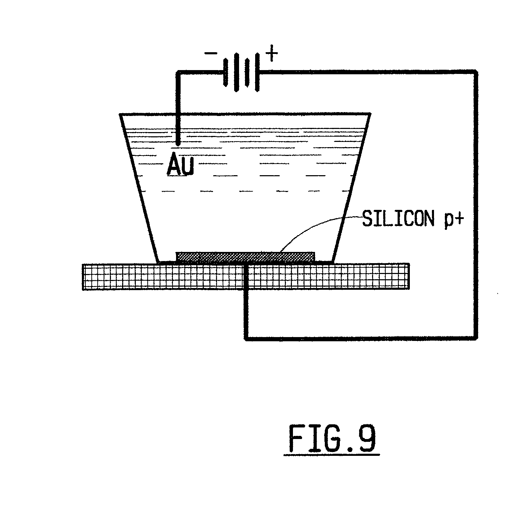

The scheme of electroerosion treatment of the silicon substrate is depicted in Fig. 9.

The electroerosion process proceeds according to the following reactions:

*Si +* 2*H*₂*O +* 4e⁻ *= SiO*₂ *+* 4*H*⁺

*SiO*₂ *+* 6*HF = SiF*²⁻₆ *+* 2*H*₂*O +* 2*H*^{*+*} (at the Si anode)

4*H*^{*+*} *+* 4*e*^{*-*} = 2*H*₂ (at the Au cathode)

The anodic reaction consumes vacancies provided by the external current generator to the silicon causing an oxidation of silicon.

To the electrochemical anodic reaction of oxidation of silicon associates a continuous chemical dissolution of the silicon oxide as soon as it forms on the surface of the solid silicon by the fluoride ions present on the solution.

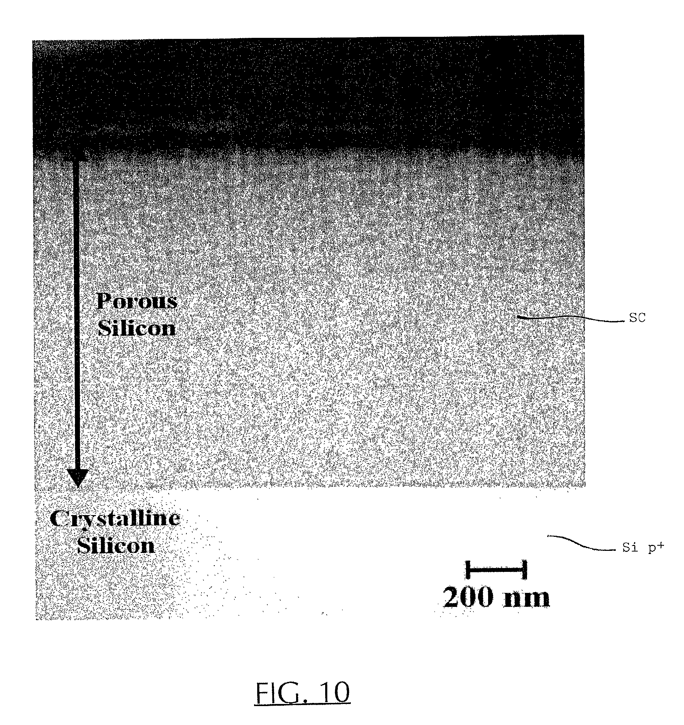

In the case of doped silicon substrate, for example in a p⁺ silicon substrate, the progressing of the two reactions determines a differentiated erosion of the crystal leading to the formation of an heterogeneous columnar crystalline skeleton SC characterized by pores of low tortuosity, as may be observed from the TEM microphotograph of Fig. 10.

The porosity of the DC produced by the electrochemical erosion depends from the current density that is forced through the electrolytic cell, from the type of electrolyte used and from the type of the monocrystalline doped silicon substrate.

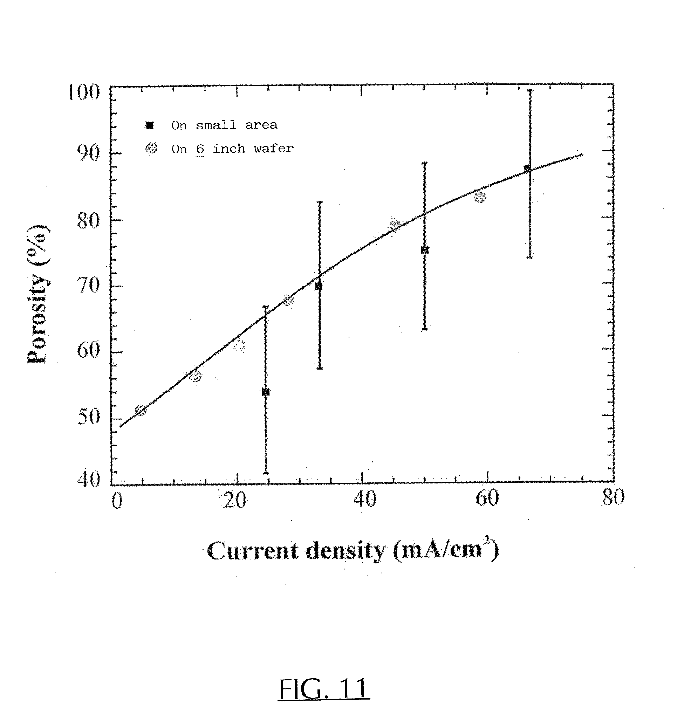

The dependence of porosity from the current density in the example illustrated is reported in the diagram of Fig. 11.

The electroerosion process is conducted until such a heterogeneous columnar crystalline skeleton SC with a substantially constant porosity for a depth that may be established according to need is formed. The depth of the highly porous channels thus formed may be comprised generally between 5 and 60 µm or even greater.

On the so formed highly porous columnar structure, as schematically depicted in Fig. 7, a catalytic metal, chosen among platinum, palladium, iridium, ruthenium, rhodium and alloys of at least one of the metals, preferably platinum, may be electroplated from an acid solution of a reducible salt of the catalytic metal, for example a chloroplatinic solution, or alternatively be deposited by sputtering. The deposition of the catalytic metal may be conducted over the entire area of the half-cell after having masked the preformed metallic strips (metals) 5 of electrical interconnection.

The catalytic metal may tend to deposit at start from the bottom of the pores of the SC structure, because the columnar skeleton is of a material having a relatively higher resistivity than the bulk of the doped silicon crystal. In practice the catalytic metal may be deposited on the porous structure until filling it almost completely, thus creating a structure 3 that in some measure is geometrically complementary to the columnar crystalline skeleton SC and which bond itself mechanically and electrically to the unmasked edges of the preformed nonporous metal strips 5.

According to a first embodiment of the method of the invention, the heterogeneous columnar crystalline skeleton SC of eroded silicon, may thereafter be completely removed by selecting etching of the doped silicon of the SC skeleton using a moderately basic aqueous solution, for example of KOH at 3% by weight, or even of tetramethilammonium hydroxide (TMAH) or even by electrochemical etching, using the same solution of hydrofluoric acid used for forming the heterogeneous columnar crystalline skeleton SC.

This second etching step, beside demolishing and removing the columnar silicon structure, determines an etching with more or less marked isotropic characteristics of the silicon substrate thus creating channels through which feeding and exhausting gases, of appropriate cross section directly underneath the microporous strips 3 of catalytic metal which, freed of the columnar silicon skeleton that acted as a deposition support during their formation, remains electrically and mechanically connected to adjacent metals that is to the nonporous metal strips 5, as schematically depicted in the cross section view of Fig. 8.

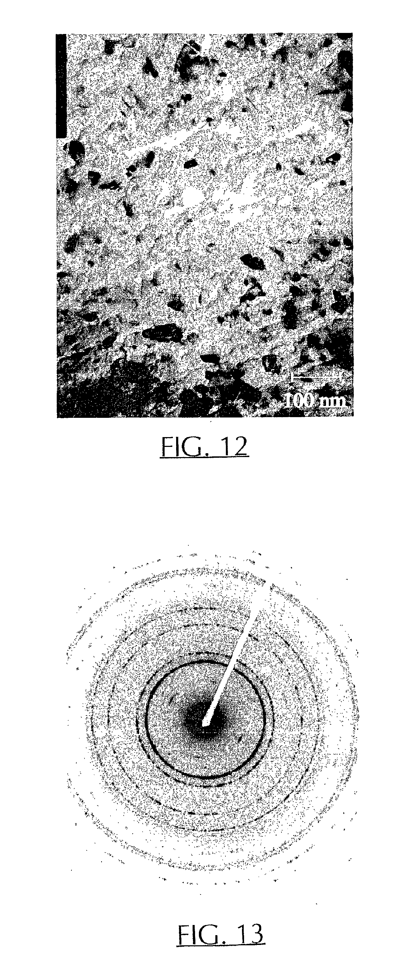

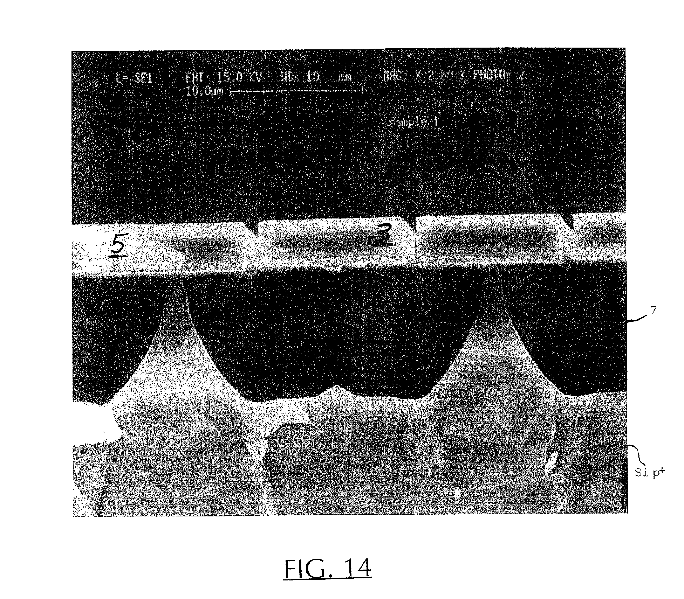

Figures 12, 13 and 14 are a PEM microphotograph of the catalytic microporous structure produced by galvanic deposition of the metal, the diffraction picture showing the superimposition of the spots relative to the columnar skeleton of eroded silicon and of spots relative to the polycrystalline structure of the deposited metal, and a SEM microphotograph of the half-cell structure integrated on silicon, corresponding to the structure schematically shown in Fig. 8.

According to an alternative embodiment, the heterogeneous columnar skeleton of eroded doped monocrystalline silicon that is formed for supporting the formation by galvanic deposition or by sputtering of the microporous layer of catalytic metal constituting the electrode of the half-cell, may even not be completely removed with a subsequent selective etching of silicon, but retained, at least partially (for example by interrupting the etching step) in order that the residual columnar skeleton continues to provide a mechanical support to the portion of microporous catalytic electrode formed thereon and to act as a current collector or distributor from the catalytic electrode toward the conducting doped silicon substrate or viceversa. Of course, the silicon substrate is readily connectable to a load circuit of the fuel cell. The load circuit of the fuel cell may even be integrated in a dedicated area on the same silicon substrate on which one of the two half-cells is formed.

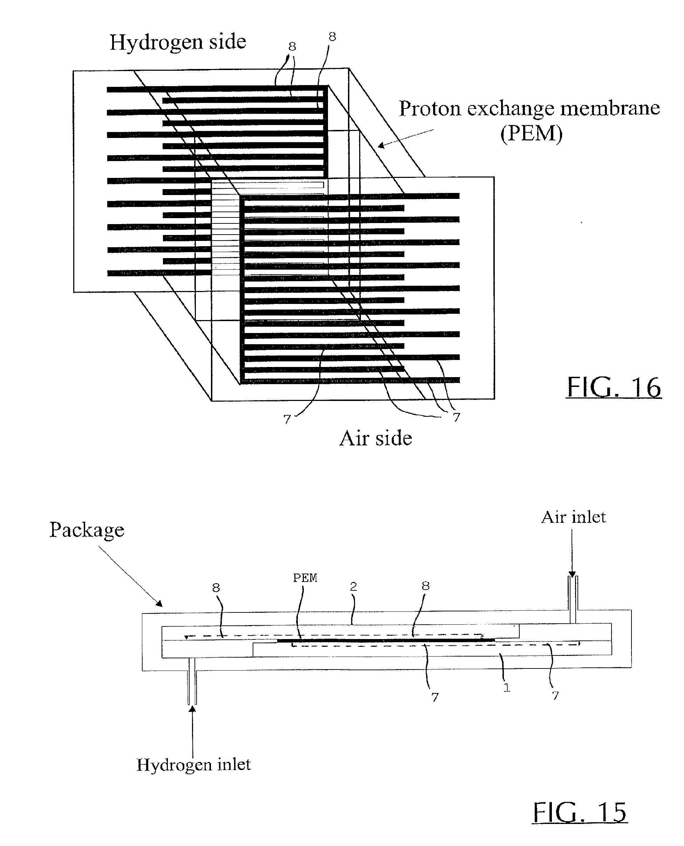

Fig. 15 is a schematic view of a cross section of the micro fuel cell realized on silicon of this invention.

A possible pattern of the gas channels 7 and 8 of the respective positive and negative half-cells is shown in the exploded view of Fig. 16.

The two silicon dices 1 and 2, eventually assembled inside a package, clamp the ion exchange membrane (PEM) disposed on the cell area such to separate the respective gaseous reagents and products of the electrodic reactions circulating in the respective channels 7 and 8 at the back of the microporous electrodic strips.

Several of the interconnected channels 7 of the positive half-cell 1 extend beyond the edge of the PEM membrane and communicate with a ventilation chamber open to the outer atmosphere.

Several of the interconnected channels 8 of the negative half-cell extend beyond the opposite edge of the PEM membrane and communicate with an inlet chamber of the fuel gas, for example hydrogen.

Under conditions of a closed load circuit of the primary cell, it is sufficient to maintain a hydrogen atmosphere in the feed or inlet chamber, for example by connecting a fuel inlet port of the packaged device to a source of hydrogen, which in case of portable instrument may be simply a liquid hydrogen bottle provided with a delivery pressure reducer, and ensuring a sufficient ventilation of the chamber communicating with the outside area. The ventilation of the chamber communicating with the channels 7 of the positive half-cell is sufficient to provide the oxygen that is consumed at the positive electrode of the micro fuel cell as well as to release in the atmosphere any water vapor in excess may be generated at the positive electrode of the cell. To the combustion air or oxygen mixture and to the gaseous fuel, water vapor may be added in case a possible dehydration of the membrane need to be prevented.

The silicon micro fuel cell of the invention, fed with hydrogen and air is capable of providing a DC voltage of about 0.8 V at a current density of about 200 mA/cm² of active cell area.

## Claims

1. A fuel cell composed of a positive half-cell comprising a microporous catalytic electrode permeable to a fuel gas and connectable through parts of the half-cell to an electric load circuit, a negative half-cell comprising a microporous catalytic electrode permeable to an oxygen containing gas and to products of the electrodic reaction and connectable through parts of the half-cell to said electrical load circuit of the cell, a cation exchange membrane separating said catalytic electrodes, means for feeding said fuel gas to said catalytic electrode of the positive cell and means for feeding oxygen containing gas to said catalytic electrode of the negative half-cell and for exhausting products of the electrodic reaction, **characterized in that**
each half-cell is formed on a conducting monocrystalline silicon substrate connectable to said load circuit, said parts of the half-cell comprising a plurality of parallel trenches cut in a cell area defined on a surface of said monocrystalline silicon substrate through which a gas may be fed to said microporous catalytic electrode of the half-cell.

2. The cell of claim 1, **characterized in that** each of said gas permeable microporous catalytic electrodes is composed of a plurality of coplanar and parallel strips of a porous catalytic metallic material, each formed above a respective trench cut in the silicon substrate and electrically connected to an adjacent strip or to adjacent strips and to the conducting silicon substrate by nonporous metal strips formed alternately between said microporous catalytic metal strips and in electrical contact with said monocrystalline silicon substrate along separation crests of adjacent parallel trenches.

3. The cell according to claim 2, wherein said nonporous metal strips are of a metal belonging to the group composed of gold, platinum, iridium, rhodium and alloys of at least one of the metals.

4. The cell according to claim 2 wherein said porous catalytic metallic material strips are of a material belonging to the group composed of platinum, palladium iridium, rhodium, ruthenium and alloys of at least one of the metals.

5. The cell according to claim 2, wherein said porous catalytic strips are of platinum supported by a porous heterogeneous columnar skeleton of silicon doped p⁺ or n⁺ formed in said trenches by electrochemical erosion of the substrate of doped silicon.

6. An integrated semiconductor device **characterized in that** it comprises a fuel cell made according to any of the claims from 1 to 5, a half-cell of which is integrated in a dedicated area on the surface of the chip containing the integrated circuit of the device which constitutes an electric load powered by the fuel cell.

7. The device according to claim 6, **characterized in that** the fuel gas reservoir for said fuel cell is a bottle containing pressurized hydrogen.

8. The device according to claim 7, **characterized in that** the fuel reservoir for said fuel cell is a bottle containing pressurized methanol and water.

9. A process of fabrication of a half-cell of a fuel cell on a conducting monocrystalline silicon substrate comprising the steps of
procuring a p⁺ or an n⁺ doped monocrystalline silicon substrate with a dopant concentration comprised between 10¹⁷ and 10¹⁹ atoms/cm³ and electrical conductivity equal or less than 1 ohm cm;
depositing a germ layer of a metal belonging to the group composed of gold, platinum, palladium, iridium, rhodium, ruthenium and alloys of at least one of said metals with a thickness comprised between 20 and 60 nm the surface of said substrate;
defining by means of a resist mask parallel strips uniformly spaced from one another and galvanically depositing, using said germ metal layer as cathode, a metal belonging to the same group of metals to form metallic strips of a thickness comprised between 5 and 30 µm;
removing the resist mask and etching the metal until completely removing said germ layer from the areas previously masked by the resist mask;
electrochemically eroding the substrate of doped silicon by polarizing it as anode in an electrolyte containing hydrofluoric acid causing anodic oxidation of silicon and a continuous dissolution of the silicon oxide formed such to produce a porous heterogeneous columnar crystalline skeleton for a depth comprised between 5 and 40 µm in the doped silicon substrate in the area unmasked by said galvanically deposited metal strips;
depositing an electrocatalytic metal belonging to the group composed of platinum, palladium, iridium, ruthenium, rhodium, and alloys of at least one of the metals on said columnar skeleton of doped silicon forming parallel microporous strips of catalytic metal electrically and mechanically connected to adjacent preformed metal strips;
selectively etching the silicon in a basic solution until forming gas circulation channels underneath said porous catalytic metal strips using said preformed metallic strips as a mask.
